(19) Europäisches Patentamt

European Patent Office

Office européen des brevets

(11) **EP 3 467 068 A1**

(12) # EUROPEAN PATENT APPLICATION
published in accordance with Art. 153(4) EPC

(43) Date of publication:
**10.04.2019 Bulletin 2019/15**

(21) Application number: **17810254.7**

(22) Date of filing: **05.06.2017**

(51) Int Cl.:
**C09J 133/04** (2006.01)    **C09J 175/04** (2006.01)

(86) International application number:
**PCT/JP2017/020802**

(87) International publication number:
**WO 2017/213077 (14.12.2017 Gazette 2017/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **06.06.2016 JP 2016112396**

(71) Applicant: **Showa Denko K.K.
Tokyo 105-8518 (JP)**

(72) Inventors:
• **TANAKA Naoyuki**
  **Tokyo 105-8518 (JP)**
• **SUGAWARA Atsushi**
  **Tokyo 105-8518 (JP)**
• **KAWAMOTO Takeshi**
  **Tokyo 105-8518 (JP)**

(74) Representative: **Strehl Schübel-Hopf & Partner
Maximilianstrasse 54
80538 München (DE)**

(54) **ADHESIVE COMPOSITION AND ADHESIVE COMPOSITION MANUFACTURING METHOD**

(57) A pressure-sensitive adhesive composition contains an acrylic resin (A) and an isocyanate crosslinking agent (B), in which a content of the isocyanate crosslinking agent (B) with respect to 100 parts by mass of the acrylic resin (A) is 0.05 to 5 parts by mass, and the acrylic resin (A) contains a monomer (a1) having a hydroxyl group in an amount of 20% by mass or more, and N-vinylacetamide (a2) in an amount of 0.5% to 5% by mass as a monomer unit.

**EP 3 467 068 A1**

**Description**

Technical Field

The present invention relates to a pressure-sensitive adhesive composition and a method of preparing a pressure-sensitive adhesive composition.
Priority is claimed on Japanese Patent Application No. 2016-112396, filed on June 6, 2016, the content of which is incorporated herein by reference.

Background Art

Currently, pressure-sensitive adhesive compositions are used in a wide range of fields. For example, when an image display device such as a mobile phone, a car navigation device, a personal computer monitor, or a television is manufactured, a pressure-sensitive adhesive composition is used to adhere a polarizing plate, a phase difference plate, a glass plate, and the like.
In the related art, pressure-sensitive adhesive compositions are disclosed in PTLs 1 to 4.
PTL 1 discloses a pressure-sensitive adhesive containing a pressure-sensitive adhesive resin obtained by copolymerizing a (meth)acrylate and/or vinyl ether monomer and an N-vinylacetamide monomer. The pressure-sensitive adhesive resin disclosed in PTL 1 has excellent tackiness and cohesiveness against adherends such as paper, skin, a polyolefin resin, a vinyl chloride resin, and the like.
PTL 2 discloses a copolymer of a monomer mixture in which the contents of a monomer having a hydroxyl group and a monomer having a functional group are adjusted with respect to a (meth)acrylic acid alkyl ester, and a pressure-sensitive adhesive for an optical member using the copolymer. The pressure-sensitive adhesive for an optical member disclosed PTL 2 relaxes the stress caused by dimensional changes such as a polarizing film, a phase difference film, and an elliptically polarizing film, and can not only prevent peeling under high humidity and heat conditions, but can also suppress color shrinkage due to light leakage.
PTL 3 discloses a pressure-sensitive adhesive sheet obtained by thermally crosslinking an adhesive composition containing a (meth)acrylate ester copolymer containing a monomer having a hydroxyl group in an amount of 15% to 30% by mass as a monomer unit constituting a polymer, an active energy ray-curable component, and a crosslinking agent. The pressure-sensitive adhesive sheet disclosed in PTL 3 is excellent in step difference followability, and excellent in resistance to wet heat and whitening and durability.
PTL 4 discloses a photocurable adhesive composition containing an acrylic resin and a methacrylic monomer having a hydroxyl group in an amount of 5% by mass to 45% by mass, and an N-vinyl carboxylic acid amide in an amount of 0.1% by mass to 10% by mass. The composition disclosed in PTL 4 provides a pressure-sensitive adhesive layer excellent in transparency and resistance to wet heat and whitening.

Citation List

Patent Literature

[PTL 1] Japanese Patent No. 3475451
[PTL 2] Japanese Patent No. 4134350
[PTL 3] Japanese Unexamined Patent Application, First Publication No. 2015-10198
[PTL 4] Japanese Unexamined Patent Application, First Publication No. 2016-53113

Summary of Invention

Technical Problem

Pressure-sensitive adhesive compositions have been widely used in the field of adhesion of adherends made of various materials. For this reason, it is required that the pressure-sensitive adhesive composition has excellent adhesiveness to the adherend formed of various materials.
For example, as a material of a polarizing plate or a phase-difference plate of an image display device, a ceramic substrate (TAC) and the like are used. In recent years, various resin materials such as polyethyleneterephthalate (PET), polymethyl methacrylate (PMMA), and cycloolefin polymer (COP) have been studied for use as a material of a polarizing plate. From this fact, it is required to have a sufficient adhesive property for various materials such as glass, various resin materials, and the like as a pressure-sensitive adhesive composition used for bonding the polarizing plate or the like of an image display device.

However, the pressure-sensitive adhesive composition in the related art did not provide excellent adhesion to adherends formed of various materials.

In addition, a pressure-sensitive adhesive composition used for bonding a polarizing plate or the like of an image display is required to have sufficient humidity and heat resistance by which it is less likely to become cloudy even when the cured product is used under high temperature and high humidity.

In addition, the pressure-sensitive adhesive composition cured by photopolymerization has a problem in that it is difficult to form a cured product having uniform properties on a substrate having a shape that can shade when irradiated with light.

In addition, in the pressure-sensitive adhesive composition containing a reactive monomer having an ethylenically unsaturated bond as a component, it is necessary to closely manage the preservation state in order to secure storage stability, and in some cases, there is a concern of the pressure-sensitive adhesive composition being deformed.

The present invention has been made in view of the above circumstances and an object of the present invention to provide a thermosetting pressure-sensitive adhesive composition which is used for obtaining a cured product having excellent humidity and heat resistance by which it is less likely to become cloudy even when used under high temperature and high humidity, and has excellent adhesiveness with respect to adherends formed of various materials.

Solution to Problem

In order to solve the above problems, the inventors of the present invention paid attention to a copolymer containing N-vinylacetamide (NVA) as a monomer unit, and performed intensive studies. As a result, the inventors of the present invention have found that a pressure-sensitive adhesive composition containing an acrylic resin obtained by copolymerizing a monomer component containing a predetermined amount of a monomer having a hydroxyl group and N-vinylacetamide with a predetermined amount of an isocyanate crosslinking agent, and have completed the present invention.

In other words, the present invention employs the following configuration.

[1] A pressure-sensitive adhesive composition containing an acrylic resin (A) and an isocyanate crosslinking agent (B), in which a content of the isocyanate crosslinking agent (B) with respect to 100 parts by mass of the acrylic resin (A) is 0.05 to 5 parts by mass, and in which the acrylic resin (A) contains 20% by mass or more of a monomer (a1) having a hydroxyl group and 0.5% to 5% by mass of N-vinylacetamide (a2), as a monomer unit.

[2] The pressure-sensitive adhesive composition according to [1], wherein the isocyanate crosslinking agent (B) is a compound having two or three isocyanate groups.

[3] The pressure-sensitive adhesive composition according to [1] or [2], wherein the isocyanate crosslinking agent (B) is a 1,6-hexamethylene diisocyanate trimer.

[4] The pressure-sensitive adhesive composition according to any one of [1] to [3], wherein a monomer having an amino group and/or amide group contained in the acrylic resin (A) as the monomer unit is only the N-vinylacetamide (a2).

[5] A method of preparing a pressure-sensitive adhesive composition including a step of preparing an acrylic resin (A) by copolymerizing a monomer component (I) containing a monomer (a1) having a hydroxyl group and N-vinylacetamide (a2);
a step of setting a content of the monomer (a1) having the hydroxyl group in the monomer component (I) to be 20% by mass or more, and a content of the N-vinylacetamide (a2) in the monomer component (I) to be 0.5% to 5% by mass; and
a step of mixing the acrylic resin (A) and an isocyanate crosslinking agent (B) such that a content of the isocyanate crosslinking agent (B) is 0.05 to 5 parts by mass with respect to 100 parts by mass of the acrylic resin (A).

[6] The method of preparing a pressure-sensitive adhesive composition according to [5], in which the isocyanate crosslinking agent (B) is a compound having two or three isocyanate groups.

[7] The method of preparing a pressure-sensitive adhesive composition according to [5] or [6], wherein the isocyanate crosslinking agent (B) is a 1,6-hexamethylene diisocyanate trimer.

[8] The method of preparing a pressure-sensitive adhesive composition according to any one of [5] to [7], wherein a monomer having an amino group and/or amide group contained in the monomer component (I) is only the N-vinylacetamide (a2).

Advantageous Effects of Invention

A pressure-sensitive adhesive composition of the present invention contains an acrylic resin and a predetermined amount of an isocyanate crosslinking agent. The acrytic resin contains, as the monomer unit thereof, a predetermined amount of a monomer having a hydroxyl group as a monomer unit and a predetermined amount of N-vinylacetamide. For this reason, it is required that the pressure-sensitive adhesive composition of the present invention be thermally curable and have excellent adhesiveness to adherends formed of various materials. In addition, the cured product of the pressure-sensitive adhesive composition of the present invention has excellent humidity and heat resistance by which it is less likely to become cloudy even when used under high temperature and high humidity.

Description of Embodiments

Hereinafter, the present invention will be described in detail.

(Pressure-sensitive adhesive composition)

The pressure-sensitive adhesive composition of this embodiment contains an acrylic resin (A) and an isocyanate crosslinking agent (B).

"Acrylic resin (A)"

The acrylic resin (A) is a copolymer which contains, as a monomer unit, a monomer having at least one (meth)acryloyl group, and a monomer (a1) having a hydroxyl group, and N-vinylacetamide (a2). Here, the monomer (a1) having a hydroxyl group itself is a monomer having a (meth)acryloyl group.

The monomer (a1) having a hydroxyl group is contained in an amount of 20% by mass or more in the acrylic resin (A), as a monomer unit. When the monomer (a1) having a hydroxyl group is contained in an amount of 20% by mass or more as a monomer unit of the acrylic resin (A), it is possible to sufficiently prevent the cured product of the adhesive composition from becoming cloudy when used under high temperature and high humidity. The monomer (a1) having a hydroxyl group is preferably contained in an amount of 25% by mass or more in the acrylic resin (A), as a monomer unit. On the other hand, if the amount of the monomer (a1) having a hydroxyl group contained in the monomer unit of the acrylic resin (A) is excessively large, the hydrophilicity of the pressure-sensitive adhesive composition is increased and the adhesiveness to a hydrophobic adherend tends to decrease. For this reason, the monomer (a1) having a hydroxyl group is preferably contained in an amount of 70% by mass or less in the monomer unit of the acrylic resin (A), and is more preferably 60% by mass or less.

The monomer (a1) having a hydroxyl group is not particularly limited, and examples thereof include hydroxyalkyl (meth)acrylates such as 2-hydroxyethyl (meth)acrylate, 2-hydroxypropyl (meth)acrylate, and 4-hydroxybutyrate (meth)acrylate; and monools having (meth)acryloyl groups derived from various polyols such as 1,3-butanediol mono (meth)acrylate, 1,4-butanediol mono (meth)acrylate, 1,6-hexanediol mono (meth)acrylate, and 3-methyl pentanediol mono (meth)acrylate. The monomer (a1) having a hydroxyl group may be used alone or two or more types thereof may be used in combination. Among these monomers having a hydroxyl group (a1), in terms of reactivity with an isocyanate group, 2-hydroxyethyl (meth)acrylate is particularly preferable.

In this specification, "(meth)acrylate" means one or both of the acrylate and methacrylate, and "(meth)acryloyl" means one or both of acryloyl and methacryloyl.

The N-vinylacetamide (a2) is contained in an amount of 0.5% to 5% by mass in the acrylic resin (A) as a monomer unit of the copolymer. When N-vinylacetamide (a2) is contained in an amount of 0.5% by mass or more as a monomer unit of the acrylic resin (A), the pressure-sensitive adhesive composition having excellent adhesiveness with respect to the adherend formed of various materials is realized. The N-vinylacetamide (a2) is preferably contained in an amount of 1% by mass or more in the acrylic resin (A) as a monomer unit of the copolymer. On the other hand, if the amount of N-vinylacetamide (a2) contained in the monomer unit of the acrylic resin (A) is excessively large, the hydrophilicity of the pressure-sensitive adhesive composition is increased and the adhesiveness to a hydrophobic adherend tends to decrease. For this reason, the N-vinylacetamide (a2) is set to be contained in an amount of 5% by mass or less as a monomer unit of the acrylic resin (A), and is preferably set to be 3% by mass or less.

The acrylic resin (A) may contain other monomers in addition to at least one monomer having a (meth)acryloyl group and a monomer (a1) having a hydroxyl group (or a monomer (a1) having a hydroxyl group is a monomer having a (meth)acryloyl group), and N-vinylacetamide (a2) as a monomer unit of copolymer.

Examples of other monomers include a (meth)acrylic ester (a3) having no amino group and no hydroxyl group, and a monomer (a4) having an amino group and/or an amide group, having no hydroxyl group, and not being N-vinylacetamide. Monomers other than those mentioned above include methacryloxypropylmethoxysilane, vinyl acetate, vinyl chloride, methacrylonitrile, acrylonitrile, styrene, methylstyrene, vinyltoluene, and the like.

In this specification, "(meth)acryl" means one or both of acrylic and methacrylic.

The (meth)acrylic ester (a3) having no amino group and no hydroxyl group is preferably contained in an amount of 30% to 79% by mass, and is more preferably contained in an amount of 40% to 75% by mass in the acrylic resin (A) as a monomer unit of the copolymer. When the content of (meth)acrylic ester (a3) having no amino group and no hydroxyl group contained as a monomer unit of the acrylic resin (A) is 30% to 79% by mass, an excellent balance between a monomer (a1) having a hydroxyl group and N-vinylacetamide (a2) contained as a monomer unit of the acrylic resin (A). As a result, it is possible to obtain a pressure-sensitive adhesive composition having excellent balance between hydrophobicity and hydrophilicity and excellent in tackiness and wet heat resistance.

Examples of the (meth)acrylic ester (a3) having no amino group and no hydroxyl group include alkyl (meth)acrylates such as methyl (meth)acrylate, ethyl (meth)acrylate, n-propyl (meth)acrylate, n-butyl (meth)acrylate, tert-butyl (meth)acrylate, isobutyl (meth)acrylate, 2-ethylhexyl (meth)acrylate, isodecyl (meth)acrylate, n-hexyl (meth)acrylate, stearyl (meth)acrylate, lauryl (meth)acrylate, and tridecyl (meth)acrylate; and cyclohexyl (meth)acrylate, norbornyl (meth)acrylate, isobornyl (meth)acrylate, norbornanyl (meth)acrylate, dicyclopentenyl (meth)acrylate, ethoxyethyl (meth)acrylate, methoxyethyl (meth)acrylate, butoxyethyl (meth)acrylate, 2-methoxyethoxyethyl (meth)acrylate, 2-ethoxyethoxyethyl (meth)acrylate, methoxydiethylene glycol (meth)acrylate, ethoxydiethylene glycol (meth)acrylate, methoxydipropylene glycol (meth)acrylate, and fluorinated alkyl (meth)acrylates such as octafluoropentyl (meth)acrylate. These may be used alone or two or more types thereof may be used in combination.

Among them, as the (meth)acrylic ester (a3) having no amino group and no hydroxyl group, methyl (meth)acrylate, n-butyl (meth)acrylate, tert-butyl (meth)acrylate, and isobutyl (meth)acrylate are particularly preferable. These (meth)acrylic esters (a3) are easily available and have appropriate reactivity, and thus are preferably used.

The monomer (a4) having an amino group and/or an amide group, having no hydroxyl group, and not being N-vinylacetamide may be contained in an amount of 5% by mass or less in the acrylic resin (A) as a monomer unit of the copolymer. When the monomer (a4) having an amino group and/or an amide group, having no hydroxyl group, and not being N-vinylacetamide is contained in an amount of 5% by mass or less, it is possible to impart basicity to the acrylic resin (A) or to change the physical properties of the pressure-sensitive adhesive composition which is the final product.

Examples of the monomer (a4) having an amino group and/or an amide group, having no hydroxyl group, and not being N-vinylacetamide include an N-(meth)acryl compound or an N-vinyl amide compound. Specific examples thereof include N,N-dimethyl aminoethyl (meth)acrylate, N,N-diethyl aminoethyl (meth)acrylamide, N,N-dimethyl aminopropyl (meth)acrylamide, aminoethyl (meth)acrylate, N,N-dimethyl acrylamide, N,N-diethyl acrylamide, N-acryloyl morpholine, N-isopropyl acrylamide, N-tert-butyl acrylamide, N-methoxymethyl acrylamide, N-ethoxymethyl acrylamide, N-n-butoxymethyl acrylamide, N-isobutoxymethyl acrylamide, N,N-dimethyl methacrylamide, N,N-diethyl methacrylamide, N-methacryloyl morpholine, N-isopropyl methacrylamide, N-tert-butyl methacrylamide, N-methoxymethyl methacrylamide, N-ethoxymethyl methacrylamide, N-n-butoxymethyl methacrylamide, N-isobutoxymethyl methacrylamide, N-vinyl pyrrolidone, N-vinyl caprolactam, and N-vinyl formamide. These may be used alone and two or more types thereof may be used in combination.

Among them, as the monomer (a4) having an amino group and/or an amide group, having no hydroxyl group, and not being N-vinylacetamide, it is particularly preferable to use N,N-dimethyl aminoethyl (meth)acrylate and/or N-acryloyl morpholine. N,N-dimethyl aminoethyl (meth)acrylate and/or N-acryloyl morpholine are easily available and have improved hydrophilicity of the acrylic resin (A), and thus are preferably used.

In the acrylic resin (A), the monomer having an amino group and/or amide group contained in the acrylic resin (A) as the monomer unit of the copolymer is preferably only N-vinylacetamide (a2). In this case, a chemically stable acrylic resin (A) having an excellent balance between hydrophilicity and hydrophobicity is obtained.

The molecular weight of the acrylic resin (A) is not particularly limited, and the weight average molecular weight (Mw) is preferably 50,000 to 2,000,000. For the measurement of the weight average molecular weight of the acrylic resin (A), gel permeation chromatography (GPC) or the like can be used.

"Isocyanate crosslinking agent (B)"

As the isocyanate crosslinking agent (B), a functional group such as one having two or more isocyanate groups, for example, polyisocyanate having two or three isocyanate groups can be exemplified. Further, the isocyanate crosslinking agent (B) may be a compound having two or more functional groups selected from an isocyanate or a functional group capable of being transformed into an isocyanate group by action of heat or the like. Such compounds include aliphatic, cycloaliphatic, araliphatic and aromatic isocyanates in the related art, but are not limited thereto.

Specific examples of the isocyanate crosslinking agent (B) include an isocyanate monomer such as tolylene diisocyanate, chlorophenylene diisocyanate, hexamethylene diisocyanate, tetramethylene diisocyanate, a 1,6-hexamethylene diisocyanate trimer, isophorone diisocyanate, xylylene diisocyanate, diphenylmethane diisocyanate, and hydrogenated diphenylmethane diisocyanate.

As the isocyanate crosslinking agent (B), an isocyanate compound obtained by addition reaction of trimethylolpropane or the like to the above isocyanate monomer, and a urethane prepolymer type isocyanate obtained by addition reaction of isocyanurate with polyether polyol, polyester polyol, acryl polyol, polybutadiene polyol, polyisoprene polyol or the like may be used.

Among the above isocyanate crosslinking agents (B), a 1,6-hexamethylene diisocyanate trimer is easily available and has high reactivity, and thus is particularly preferable.

In the pressure-sensitive adhesive composition of this embodiment, the content of the isocyanate crosslinking agent (B) is 0.05 to 5 parts by mass with respect to 100 parts by mass of the acrylic resin (A), and is preferably 0.1 to 1 parts by mass. When the content of the isocyanate crosslinking agent (B) with respect to 100 parts by mass of the acrylic resin (A) is less than 0.05 parts by mass, a crosslinking effect by the isocyanate crosslinking agent (B) is not sufficiently exhibited. On the other hand, the content of the isocyanate crosslinking agent (B) with respect to 100 parts by mass of the acrylic resin (A) is excessively larger than 5 parts by mass, the flexibility of the cured product obtained by curing the pressure-sensitive adhesive composition becomes insufficient.

(Method of preparing pressure-sensitive adhesive composition)

Next, a method of preparing a pressure-sensitive adhesive composition of this embodiment will be described.

"Step of preparing acrylic resin (A)"

In the method of preparing the pressure-sensitive adhesive composition of this embodiment, first, a step of preparing an acrylic resin (A) is performed. In this step, the acrylic resin (A) is prepared by copolymerizing a monomer component (I) which contains at least one monomer having a (meth)acryloyl group, and a monomer (a1) having a hydroxyl group and N-vinylacetamide (a2). In a case where the monomer (a1) having a hydroxyl group is a monomer having a (meth)acryloyl group, as the monomer component (I), only the monomer (a1) having a hydroxyl group and the N-vinylacetamide (a2) may be used.

The N-vinylacetamide (a2) used for the monomer component (I) can be synthesized by using the synthesis method described in the known document. However, when N-vinylacetamide synthesized by a general synthesis method is used, polymerization may be inhibited by impurities mixed in N-vinylacetamide, and a preferable acrylic resin (A) may not be obtained in some cases. For this reason, as the N-vinylacetamide (a2) used for the monomer component (I), it is preferable to use commercially available N-vinylacetamide (prepared by Showa Denko KK) which has few impurities inhibiting the polymerization and excellent polymerizability.

In the step of preparing the acrylic resin (A), the content of the monomer (a1) having a hydroxyl group in the monomer component (I) is set to be 20% by mass or more, and the content of the N-vinylacetamide (a2) in the monomer component (I) is set to be 0.5 to 5% by mass.

The monomer component (I) may contain other monomers in addition to the monomer (a1) having a hydroxyl group and the N-vinylacetamide (a2).

In a case where the monomer component (I) contains the (meth)acrylic ester (a3) having no amino group and no hydroxyl group as another monomer, the content thereof in the monomer component (I) is preferably set to be 30% to 79% by mass, and is more preferably 40% to 75% by mass.

In a case where the monomer component (I) contains the monomer (a4) having an amino group and/or an amide group, having no hydroxyl group, and not being N-vinylacetamide as another monomer, the content thereof in the monomer component (I) is preferably 5% by mass or less.

The monomer having an amino group and/or amide group in the monomer component (I) is preferably only N-vinylacetamide (a2).

As a method of copolymerizing the monomer component (I) in this embodiment, general polymerization methods such as solution polymerization, dropping polymerization, reverse phase suspension polymerization, emulsion polymerization, precipitation polymerization and the like can be used. Among them, as the method of copolymerizing the monomer component (I), solution polymerization, which is a simple method, is preferable.

As a method of copolymerizing the monomer component (I) using the solution polymerization, for example, a method in which a polymerization initiator is added to a solution in which the monomer component (I) is dissolved in a solvent to form a mixed solution, and the mixture is heated to perform the polymerization reaction may be used.

As the polymerization initiator used for copolymerizing the monomer component (I), conventionally known polymerization initiators may be used alone, or two or more types thereof may be used in combination. Specific examples of the polymerization initiator include various peroxides such as benzoyl peroxide and lauroyl peroxide, and an azo compound such as azobisisobutyronitrile.

Examples of a solvent to be used at the time of copolymerizing the monomer component (I) include esters such as methyl acetate/ethyl acetate, aromatic hydrocarbons such as benzene, toluene and xylene, and ketones such as acetone, methyl ethyl ketone, and methyl isobutyl ketone. These solvents may be used alone and two or more types thereof may be used in combination.

In addition, as a method of copolymerizing the monomer component (I) using the dropping polymerization, a method in which the solution in which the polymerization initiator is dissolved is heated to 35 °C to 75 °C and the monomer component (I) is added dropwise to the temperature-adjusted solution over time can be exemplified.

"Step of mixing acrylic resin (A) and isocyanate crosslinking agent (B)"

Next, the acrylic resin (A) obtained by the step of preparing the acrylic resin (A), the isocyanate crosslinking agent (B), and the solvent added as necessary are mixed such that the content of the isocyanate crosslinking agent (B) with respect to 100 parts by mass of the acrylic resin (A) is set to be 0.05 to 5 parts by mass.

As the solvent used in the step of mixing the acrylic resin (A) and the isocyanate crosslinking agent (B), the same one as that of the solvent used at the time of copolymerizing the monomer component (I) can be used.

In a case of using the acrylic resin (A) prepared by solution polymerization, it is preferable to mix the acrylic resin (A) and the isocyanate crosslinking agent (B) by a method of adding the isocyanate crosslinking agent (B) to the solution containing the acrylic resin (A) after completion of the polymerization.

Through the above steps, it is possible to obtain the pressure-sensitive adhesive composition of this embodiment.

The pressure-sensitive adhesive composition of the embodiment contains a predetermined amount of an acrylic resin (A) and a predetermined amount of an isocyanate crosslinking agent (B). The acrylic resin (A) contains, as the monomer unit thereof, a monomer having at least one (meth)acryloyl group, a monomer (a1) having a hydroxyl group in an amount of 20% by mass or more, and N-vinylacetamide (a2) in an amount of 0.5% to 5% by mass. For this reason, the pressure-sensitive adhesive composition of the embodiment has excellent adhesiveness to adherends formed of various materials. Specifically, the pressure-sensitive adhesive composition of the embodiment has excellent tackiness with respect to, for example, the following adherends.

Examples of the adherends include glass and a resin film. Examples of the resin film include a polyethylene terephthalate film, a polybutylene terephthalate film, a polyethylene naphthalate film, a polyethylene film, a polypropylene film, cellophane, a diacetyl cellulose film, a triacetyl cellulose film, an acetyl cellulose butyrate film, a polyvinyl chloride film, a polyvinylidene chloride film, a polyvinyl alcohol film, an ethylene-vinyl acetate copolymer film, a polystyrene film, a polycarbonate film, a polymethylpentene film, a polysulfone film, a polyether ether ketone film, a polyether sulfone film, a polyetherimide film, a polyimide film, a fluorine resin film, a nylon film, an acrylic resin film, and a polycycloolefin film.

In addition, it is preferable that the pressure-sensitive adhesive composition of the embodiment not include a reactive monomer having an ethylenic unsaturated bond, as a component. The pressure-sensitive adhesive composition in this case can easily secure storage stability as compared with a pressure-sensitive adhesive composition containing a reactive monomer having an ethylenic unsaturated bond as a component.

Further, the pressure-sensitive adhesive composition of the embodiment is a thermosettable composition which forms a cured product by crosslinking reaction at room temperature or under heating. The cured product of the pressure-sensitive adhesive composition of the embodiment has excellent humidity and heat resistance by which it is less likely to become cloudy even when used under high temperature and high humidity.

On the other hand, the pressure-sensitive adhesive composition of the embodiment may have a difficulty in curing with active energy rays such as ultraviolet rays (UV). For example, even if a mixture obtained by adding the monomer (a1) having a hydroxyl group, and a monomer having the N-vinylacetamide (a2) and a (meth)acryloyl group to the pressure-sensitive adhesive composition of the embodiment containing the acrylic resin (A) and the isocyanate crosslinking agent (B) is irradiated with active energy rays such as UV, the curing reaction of the curable resin portion does not proceed sufficiently and the desired adhesive force, humidity and heat resistance and other effects cannot be obtained in some cases.

The pressure-sensitive adhesive composition and the method of the same are not limited to the above-described embodiment.

For example, in the above-described embodiment, the pressure-sensitive adhesive composition was prepared by mixing the acrylic resin (A), the isocyanate crosslinking agent (B), and a solvent added as necessary. However, the pressure-sensitive adhesive composition of the present invention may contain other tackifying resins in addition to the acrylic resin (A) and the isocyanate crosslinking agent (B). Such a pressure-sensitive adhesive composition can be prepared by mixing the acrylic resin (A), the isocyanate crosslinking agent (B), other tackifying resins, and the solvent as necessary in the step of mixing the acrylic resin (A) and the isocyanate crosslinking agent (B). Examples of other tackifying resins include a xylene resin, a phenol-modified xylene resin, a phenol resin, and a rosin or rosin-modified resin.

[Examples]

Hereinafter, the present invention will be described in detail with examples. The present invention is not limited by the following examples unless it goes beyond its gist. In the examples, "parts" and "%" are based on mass.

(Preparing of acrylic resins A-1 to A-8)

A three-necked jacketed flat-bottom separable flask equipped with a reflux condenser, a stirrer, a nitrogen gas blowing pipe, and a temperature sensor was prepared. To the flat-bottom separable flask, 110 parts of ethyl acetate (ethyl acetate (1) in Table 1) and 22.5 parts of acetone were charged and the temperature was raised to 65 °C while stirring and nitrogen degassing. One hour after the start of nitrogen degassing, a solution prepared by dissolving 0.05 parts of azobisisobutyronitrile (AIBN) which is a polymerization initiator in 0.5 parts of ethyl acetate (ethyl acetate (2) in Table 1) was charged in a flat-bottom separable flask using a syringe.

100 parts of a mixture formed of the monomer component (I) indicated in Table 1 was added dropwise to a flat-bottom separable flask over a period of two hours from about 5 minutes after the solution containing the polymerization initiator was charged. One minute after the dropwise addition of the mixture was completed, ethyl acetate (ethyl acetate (3) in Table 1) was added dropwise (additionally added) to the flat-bottom separable flask in the addition amount indicated in Table 1 while stirring was continued at 70 °C over 30 minutes. The reaction was continued at 70 °C while stirring was continued for 1.5 hours so as to obtain a solution containing the acrylic resins A-1 to A-8.

[Table 1]

| | | | A-1 | A-2 | A-3 | A-4 | A-5 | A-6 | A-7 | A-8 |
|---|---|---|---|---|---|---|---|---|---|---|
| Solution containing acrylic resin | Solution containing polymerization initiator (unit: parts by mass) | Ethyl acetate (1) | 110 | 110 | 110 | 110 | 110 | 110 | 110 | 110 |
| | | Acetone | 22.5 | 22.5 | 22.5 | 22.5 | 22.5 | 22.5 | 22.5 | 22.5 |
| | | AIBN | 0.05 | 0.05 | 0.05 | 0.05 | 0.05 | 0.05 | 0.05 | 0.05 |
| | | Ethyl acetate (2) | 0.5 | 0.5 | 0.5 | 0.5 | 0.5 | 0.5 | 0.5 | 0.5 |
| | Monomer component (I) (unit: parts by mass) | BA | 68.5 | 68.5 | 97 | 88.5 | 78.5 | 70 | 67 | 60 |
| | | HEA | 30 | 30 | 1.5 | 10 | 20 | 30 | 30 | 30 |
| | | DMAEA | 0 | 1.5 | 0 | 0 | 0 | 0 | 0 | 0 |
| | | NVA | 1.5 | 0 | 1.5 | 1.5 | 1.5 | 0 | 3 | 10 |
| | Additional solvent (unit: parts by mass) | Ethyl acetate (3) | 70.5 | 70.5 | 70.5 | 70.5 | 70.5 | 70.5 | 70.5 | 70.5 |
| Viscosity (unit: mPa·s) | | | 16200 | 7340 | 2480 | 2750 | 3600 | 4060 | 11200 | 160000 < Not measurable |
| Molecular weight | | Mn | 298958 | 95528 | Not measured | Not measured | Not measured | Not measured | Not measured | Not measured |
| | | Mw | 1E+06 | 234928 | Not measured | Not measured | Not measured | Not measured | Not measured | Not measured |
| | | Mw/Mn | 4.1479 | 2.4593 | Not measured | Not measured | Not measured | Not measured | Not measured | Not measured |

"BA", "HEA", "DMAEA", and "NVA" illustrated in Table 1 are the compounds indicated below.
BA: n-butyl acrylate
HEA: 2-hydroxyethyl acrylate
DMAEA: N,N-dimethyl aminoethyl acrylate
NVA: N-vinylacetamide (prepared by Showa Denko KK)

The viscosities of the solutions containing the acrylic resins of A-1 to A-8 thus obtained were measured under the following conditions using the apparatus indicated below. The results are indicated in Table 1. The unit of viscosity is mPa·s.

(Viscosity measurement method)

Apparatus: HADV-E (manufactured by Brookfield)
Used spindle: HA No.7
Rotation speed: 50 rpm

The viscosity was measured when the solution containing the prepared acrylic resin was cooled and the solution temperature stably passed at a temperature of 20 °C for five minutes.
As illustrated in Table 1, in A-8 containing 10 parts by mass of N-vinylacetamide, the viscosity of the solution containing the acrylic resin was more than 160,000 and could not be measured.
In addition, the molecular weight of the acrylic resin contained in the solution containing the acrylic resins A-1 and A-2 was measured under the following conditions using the apparatus indicated below. The results are indicated in Table 1.
"Mn" indicated in Table 1 is a number average molecular weight, and "Mw" is a weight average molecular weight.

(Molecular weight measurement method)

Apparatus (Gel Permeation Chromatography (GPC)): Pump (PU-2080 Plus), Oven (CO-2065 Plus), Sampler (AS-2065), Detector (RI-2031)) (all manufactured by JASCO Corporation)
Column: SHODEX LF-804 × 3 (trade name: manufactured by Showa Denko KK)
Conditions: Solvent THF (tetrahydrofuran), measurement temperature 40 °C

(Examples 1 to 3 and Comparative Examples 1 to 4)

A solution containing the acrylic resins A-1 to A-7, the isocyanate crosslinking agent (B) indicated below, and ethyl acetate (ethyl acetate (4) in Table 2) were compounded in the proportions indicated in Table 2, and were mixed by the following method using a mixing apparatus indicated below so as to obtain pressure sensitive adhesive compositions of Examples 1 to 3 and Comparative Examples 1 to 4.
As the isocyanate crosslinking agent (B), a 1,6-hexamethylene diisocyanate trimer (trade name "Coronate HX" manufactured by Nippon Polyurethane Industry Co., Ltd.) was used.
As the mixing device, an AWATORI RENTARO (trade name: ARE-300, manufactured by Thinky Corporation) was used. As a mixing method, a method of stirring at 2000 rpm for 60 seconds and then defoaming at 2200 rpm for 60 seconds was carried out.
Next, an evaluation sheet was produced with the pressure-sensitive adhesive compositions in Examples 1 to 3 Comparative Examples 1 to 4 by the following method.

(Preparation of evaluation sheet)

A pressure-sensitive adhesive composition was applied on a heavy release PET film having a thickness of 75 μm (HY-S-10 (manufactured by Higashiyama Film Co., Ltd.)) using an applicator having a thickness of 300 μm. Then, a heavy release PET film coated with the pressure-sensitive adhesive composition was dried at room temperature for five minutes and dried in an oven at 50 °C for five minutes, at 80 °C for ten minutes, and at 110 °C for ten minutes.

Thereafter, a light peel able PET film (E7006, manufactured by Toyobo Co., Ltd.) having a thickness of 75 μm was laminated on a dried pressure-sensitive adhesive composition and cured at 40 °C for ten days.

Through the above steps, an evaluation sheet having a pressure-sensitive adhesive layer formed of a cured product of the pressure-sensitive adhesive composition was obtained between the heavy release PET film and the peel able PET film.

Next, using the evaluation sheets of Examples 1 to 3 and Comparative Examples 1 to 4, the humidity and heat resistance and adhesiveness of the pressure-sensitive adhesive layer were examined by the following method.

(Humidity and heat resistance test)

The evaluation sheet was cut into a size of 30 mm × 30 mm, the light peel able PET film was peeled off, and the pressure-sensitive adhesive layer side of the evaluation sheet was bonded to a glass plate (CORNING 1737 (Corning Incorporated)). Thereafter, an autoclave treatment (40 °C, 0.5 MPa, 15 minutes) was performed so as to obtain a test piece in which the glass plate, the pressure-sensitive adhesive layer, and the heavy release PET film were laminated in that order. Using the test piece, the humidity and heat resistance test was conducted for 200 hours under an atmosphere of a temperature of 85 °C and a relative humidity of 85%. Regarding the test piece after the humidity and heat resistance test, a haze value was calculated by the following method and evaluated based on the following criteria. The results are indicated in Table 2.

The haze value was evaluated by measuring the diffuse transmittance and total light transmittance using a turbidity meter (NDH 5000 (Nippon Denshoku Industries Co., Ltd.)) and substituting the result into the following equation.

$$\text{Haze value (\%)} = (\text{diffuse transmittance/total light transmittance}) \times 100$$

(Evaluation)

Good Haze value after humidity and heat test is less than 3.0
Not Good Haze value after humidity and heat test is 3.0 or more

(Adhesive force test)

The evaluation sheet was cut into a size of 25 mm × 130 mm, the light peel able PET film was peeled off, and the pressure-sensitive adhesive layer side of the evaluation sheet was bonded to the test object indicated below. Adhesion of the evaluation sheet to the test object was carried out by a method of pressurizing and bonding 1 kg rubber roller 10 times in an atmosphere at a temperature of 23 °C and a relative humidity of 50%, and leaving it for 30 minutes under the same atmosphere. Thereafter, 180-degree peeling strength of the evaluation sheet was measured at a peeling rate of 200 mm/min using the measuring instrument indicated below. The results are indicated in Table 2.

(Test object)

PC (polycarbonate): manufactured by Sumitomo Bakelite Co., Ltd., POLYCA ACE ECK 100 UU

Glass plate: CORNING 1737 manufactured by Corning
PET (polyethylene terephthalate): manufactured by Toyobo Co., Ltd., Cosmo Shine A 4100
COP (cycloolefin polymer): ZEONOR ZF 14-100 manufactured by Zeon Corporation
PMMA (polymethyl methacrylate): TECHNOLLOY S 001 G manufactured by SUMIKA ACRYL CO., LTD.
TAC (cellulose triacetate): FUJI TAC 80 μm (measuring instrument) manufactured by Fuji Film Co., Ltd.
Tensilon universal testing machine (PM-100, manufactured by Orientec Co., Ltd.)

[Table 2]

| | Example 1 | Comparative Example 1 | Comparative Example 2 | Comparative Example 3 | Example 2 | Comparative Example 4 | Example 3 |
|---|---|---|---|---|---|---|---|
| Solution containing acrylic resin A-1 (unit: parts by mass) (resin in solution containing acrylic resin) (% by mass) | 100 (33) | | | | | | |
| Solution containing acrylic resin A-2 (unit: parts by mass) (resin in solution containing acrylic resin) (% by mass) | | 100 (33) | | | | | |
| Solution containing acrylic resin A-3 (unit: parts by mass) (resin in solution containing acrylic resin) (% by mass) | | | 100 (25) | | | | |
| Solution containing acrylic resin A-4 (unit: parts by mass) (resin in solution containing acrylic resin) (% by mass) | | | | 100 (25) | | | |
| Solution containing acrylic resin A-5 (unit: parts by mass) (resin in solution containing acrylic resin) (% by mass) | | | | | 100 (25) | | |
| Solution containing acrylic resin A-6 (unit: parts by mass) (resin in solution containing acrylic resin) (% by mass) | | | | | | 100 (25) | |
| Solution containing acrylic resin A-7 (unit: parts by mass) (resin in solution containing acrylic resin) (% by mass) | | | | | | | 100 (25) |
| Amount of isocyanate crosslinking agent (B) with respect to 100 parts by mass of solution containing acrylic resin (A) (unit: parts by mass) (Amount of the same component with respect to 100 parts by mass of acrylic resin (A) (unit: parts by mass)) | 0.24 (0.7) | 0.24 (0.7) | 0.2 (0.8) | 0.2 (0.8) | 0.2 (0.8) | 0.2 (0.8) | 0.2 (0.8) |
| Ethyl acetate (4) (unit: parts by mass) | 120 | 120 | 25 | 25 | 25 | 25 | 25 |
| Humidity and heat resistance test | Good | Good | Not good | Good | Good | Good | Good |
| Adhesive force test (unit: N/25 mm) — PC | 2.54 | 0.30 | 7.62 | 3.51 | 4.93 | 4.19 | 9.64 |
| Adhesive force test (unit: N/25 mm) — GLASS | 3.57 | 0.56 | 8.34 | 3.90 | 5.42 | 4.68 | 18.31 |
| Adhesive force test (unit: N/25 mm) — PET | 1.84 | 0.10 | 11.38 | 3.68 | 3.55 | 3.54 | 12.75 |
| Adhesive force test (unit: N/25 mm) — COP | 0.90 | 0.85 | 1.23 | 1.65 | 3.43 | 1.68 | 5.32 |
| Adhesive force test (unit: N/25 mm) — PMMA | 1.53 | 0.33 | 6.92 | 5.22 | 8.86 | 5.79 | 13.68 |
| Adhesive force test (unit: N/25 mm) — TAC | 1.32 | 0.30 | 6.68 | 4.06 | 16.64 | 7.28 | 19.89 |

With respect to the results of the adhesive force test of each test object, the adhesive force of Example 1 was calculated when the adhesive force of Comparative Example 1 was set as 1. The results are indicated in Table 3.

With respect to the results of the adhesive force test of each test object, the adhesive force of Examples 2 and 3, and Comparative Examples 2 and 3 were calculated when the adhesive force of Comparative Example 4 was set as 1. The results are indicated in Table 3.

[Table 3]

| | | Example 1 | Comparative Example 1 | Comparative Example 2 | Comparative Example 3 | Example 2 | Comparative Example 4 | Example 3 |
|---|---|---|---|---|---|---|---|---|
| Adhesive force test (unit: none) Value when test value of Comparative Example 1 was set as 1 | PC | 8.5 | 1.0 | | | | | |
| | GLASS | 6.4 | 1.0 | | | | | |
| | PET | 18.4 | 1.0 | | | | | |
| | COP | 1.1 | 1.0 | | | | | |
| | PMMA | 4.7 | 1.0 | | | | | |
| | TAC | 4.4 | 1.0 | | | | | |
| Adhesive force test (unit: none) Value when test value of Comparative Example 4 was set as 1 | PC | | | 1.8 | 0.8 | 1.2 | 1.0 | 2.3 |
| | GLASS | | | 1.8 | 0.8 | 1.2 | 1.0 | 3.9 |
| | PET | | | 3.2 | 1.0 | 1.0 | 1.0 | 3.6 |
| | COP | | | 0.7 | 1.0 | 2.0 | 1.0 | 3.2 |
| | PMMA | | | 1.2 | 0.9 | 1.5 | 1.0 | 2.4 |
| | TAC | | | 0.9 | 0.6 | 2.3 | 1.0 | 2.7 |

As indicated in Table 2, in each of the pressure-sensitive adhesive layers of Example 1 and Comparative Example 1, the haze value after the humidity and heat resistance test was sufficiently low, and the humidity and heat resistance was excellent.

In addition, as indicated in Tables 2 and 3, in the pressure-sensitive adhesive layer of Example 1, the results of the adhesive force test on all test objects were 0.80 (N/25 mm) or more, and the adhesion was excellent with respect to all test objects. In particular, in the pressure-sensitive adhesive layer of Example 1, the result of the adhesive force test in PC, PMMA, glass, and PET was 1.50 (N/25 mm) or more, and the adhesiveness was excellent.

In contrast, in the pressure-sensitive adhesive layer of Comparative Example 1 using the monomer component (I) not containing N-vinylacetamide, the results of the adhesive force test of all the test objects excluding COP were less than 0.80 (N/25 mm), and the adhesion was insufficient.

As indicated in Table 2, in Examples 2 and 3 and Comparative Examples 2 to 4, is the same Amount of isocyanate crosslinking agent (B) with respect to 100 parts by mass of acrylic resin (A).

In the pressure-sensitive adhesive layers of Examples 2 and 3, the haze value after the humidity and heat resistance test was sufficiently low, and the humidity and heat resistance was excellent.

In contrast, in Comparative Example 2 in which the amount of the monomer (a1) having a hydroxyl group contained as a monomer unit in the acrylic resin (A) was small, the haze value after the humidity and heat resistance test was high, and the humidity and heat resistance was insufficient.

In addition, as indicated in Tables 2 and 3, as the results of the adhesive force test on all the test objects, the adhesive forces of the pressure-sensitive adhesive layers of Examples 2 and 3 were more excellent than those of Comparative Example 3 having less monomer (a1) having a hydroxyl group in the acrylic resin (A) as a monomer unit and Comparative Example 4 using a monomer component (I) not containing N-vinylacetamide, which was good.

Industrial Applicability

The pressure-sensitive adhesive composition of the embodiment has excellent adhesiveness to adherends formed of various materials such as glass and various resin materials. In addition, the cured product of the pressure-sensitive adhesive composition of the embodiment has excellent wet heat resistance by which it is less likely to become cloudy even when used under high temperature and high humidity.

Therefore, the pressure-sensitive adhesive composition of the embodiment is particularly useful for bonding a polarizing plate, a phase difference plate, a glass plate, and the like used in an image display device such as a mobile phone, a car navigation device, a personal computer monitor, or a television.

**Claims**

1. A pressure-sensitive adhesive composition comprising:

   an acrylic resin (A); and
   an isocyanate crosslinking agent (B),
   wherein a content of the isocyanate crosslinking agent (B) with respect to 100 parts by mass of the acrylic resin (A) is 0.05 to 5 parts by mass, and
   wherein the acrylic resin (A) contains 20% by mass or more of a monomer (a1) having a hydroxyl group and 0.5% to 5% by mass of N-vinylacetamide (a2), as a monomer unit.

2. The pressure-sensitive adhesive composition according to Claim 1, wherein the isocyanate crosslinking agent (B) is a compound having two or three isocyanate groups.

3. The pressure-sensitive adhesive composition according to Claim 1 or 2, wherein the isocyanate crosslinking agent (B) is a 1,6-hexamethylene diisocyanate trimer.

4. The pressure-sensitive adhesive composition according to any one of Claims 1 to 3,
   wherein a monomer having an amino group and/or amide group contained in the acrylic resin (A) as the monomer unit is only the N-vinylacetamide (a2).

5. A method of preparing a pressure-sensitive adhesive composition comprising:

   a step of preparing an acrylic resin (A) by copolymerizing a monomer component (I) containing a monomer (a1) having a hydroxyl group and N-vinylacetamide (a2);

a step of setting a content of the monomer (a1) having the hydroxyl group in the monomer component (I) to be 20% by mass or more, and a content of the N-vinylacetamide (a2) in the monomer component (I) to be 0.5% to 5% by mass; and
a step of mixing the acrylic resin (A) and an isocyanate crosslinking agent (B) such that a content of the isocyanate crosslinking agent (B) is 0.05 to 5 parts by mass with respect to 100 parts by mass of the acrylic resin (A).

6. The method of preparing a pressure-sensitive adhesive composition according to Claim 5,
wherein the isocyanate crosslinking agent (B) is a compound having two or three isocyanate groups.

7. The method of preparing a pressure-sensitive adhesive composition according to Claim 5 or 6,
wherein the isocyanate crosslinking agent (B) is a 1,6-hexamethylene diisocyanate trimer.

8. The method of preparing a pressure-sensitive adhesive composition according to any one of Claims 5 to 7,
wherein a monomer having an amino group and/or amide group contained in the monomer component (I) is only the N-vinylacetamide (a2).

**INTERNATIONAL SEARCH REPORT**

International application No.

PCT/JP2017/020802

### A. CLASSIFICATION OF SUBJECT MATTER
*C09J133/04*(2006.01)i, *C09J175/04*(2006.01)i

According to International Patent Classification (IPC) or to both national classification and IPC

### B. FIELDS SEARCHED

Minimum documentation searched (classification system followed by classification symbols)
C09J133/04, C09J175/04

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2008-174658 A (Showa Denko Kabushiki Kaisha), 31 July 2008 (31.07.2008), claims (Family: none) | 1-8 |
| A | JP 2001-146508 A (Showa Denko Kabushiki Kaisha), 29 May 2001 (29.05.2001), claims (Family: none) | 1-8 |
| A | JP 07-070244 A (Showa Denko Kabushiki Kaisha), 14 March 1995 (14.03.1995), claims; examples (Family: none) | 1-8 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 03 July 2017 (03.07.17) | 18 July 2017 (18.07.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**EP 3 467 068 A1**

**INTERNATIONAL SEARCH REPORT**

International application No.

PCT/JP2017/020802

C (Continuation). DOCUMENTS CONSIDERED TO BE RELEVANT

| Category* | Citation of document, with indication, where appropriate, of the relevant passages | Relevant to claim No. |
|---|---|---|
| A | JP 09-169959 A (Sekisui Chemical Co., Ltd.), 30 June 1997 (30.06.1997), claims (Family: none) | 1-8 |
| A | WO 2015/140911 A1 (Lintec Corp.), 24 September 2015 (24.09.2015), claims & KR 10-2016-0063414 A & TW 201542752 A | 1-8 |
| A | JP 2013-104006 A (Nitto Denko Corp.), 30 May 2013 (30.05.2013), claims & US 2013/0123451 A1 & CN 103102820 A & KR 10-2013-0054200 A & TW 201333146 A | 1-8 |

Form PCT/ISA/210 (continuation of second sheet) (January 2015)

18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016112396 A
- JP 3475451 B
- JP 4134350 B
- JP 2015010198 A
- JP 2016053113 A